# EUROPEAN PATENT SPECIFICATION

(11) **EP 1 451 667 B1**
(45) Date of publication and mention of the grant of the patent: **09.05.2007**
(21) Application number: 02781569.5
(22) Date of filing: 20.11.2002
(51) Int. Cl.: G06F 1/16

(54) **ELECTRONIC PORTABLE DEVICE**
ELEKTRONISCHES TRAGBARES GERÄT
DISPOSITIF ELECTRONIQUE PORTATIF

(30) Priority: 27.11.2001 EP 01403035
(43) Date of publication of application: 01.09.2004
(73) Proprietor: Koninklijke Philips Electronics N.V., 5621 BA Eindhoven (NL)
(72) Inventor: BERROU, Erwan, NL-5656 AA Eindhoven (NL)
(74) Representative: van Oudheusden-Perset, Laure E.
(86) International application number: PCT/IB2002/004883
(87) International publication number: WO 2003/046705

(56) References cited:
- EP-A- 0 961 456
- WO-A-01/22694
- US-A- 5 898 774
- US-A- 5 973 915
- US-A- 6 149 442

## Description

### FIELD OF THE INVENTION

The present invention relates to an electronic portable device comprising at least a first part comprising a display, a second part comprising at least two faces and comprising a keyboard on at least one of its faces, said second part being linked to the first part. The present invention is particularly relevant for a third generation mobile phone.

### BACKGROUND OF THE INVENTION

Such an electronic device is sold by Ericsson under the reference R380. This device brings together the functions of a mobile phone, calendar, address book and mobile Internet device with e-mail and WAP. In order to provide the function of mobile Internet device, the Ericsson R380 device comprises a large screen. But in order to provide the function of mobile phone, this device comprises a flip covering, in the closed state, a predetermined first area of the large screen and comprising a keyboard. When the flip is closed, the device looks like a mobile phone with a small screen, which is a predetermined second area of the large screen. But when the flip is opened, using rotating means, the device has a large screen and can be used, for example, as a mobile Internet device. A drawback of such an electronic portable device is that it has only two functional positions, which reduces the number of functions that can be brought together by the device.

US5657370 describes a cellular portable radiotelephone including a first housing slidably and pivotally mounted to a second housing.

US5898774 describes a portable information terminal with a card casing that is slidably and reversibly attached to a body casing.

US6149442 describes an electronic device with a first housing rotatable and slidable with respect to a second housing.

### SUMMARY OF THE INVENTION

It is an object of the invention to provide an electronic portable device having more than two functional positions and hence to bring together a plurality of functions.

To this end, an electronic portable device as described in the opening paragraph is characterized according to the invention in that it comprises translating means allowing the second part to translate along the first part and rotating means allowing the second part to rotate around the first part.

According to the invention, the second part of the device has more degrees of freedom than in the device of the background art. For example, when the device is used as a mobile Internet device, the second part can be placed behind the first part comprising a large display. Consequently, in such a situation, the electronic portable device is more compact than the device of the background art.

In a preferred embodiment, the translating means comprise at least one slot along which a slider can slide, and the rotating means comprise at least one axis of rotation around which the slider can rotate, the slot and the axis of rotation belonging to either the first part or the second part, and the slider belonging to the other part. According to this embodiment, the rotating means and translating means are easy to manufacture. Actually, unlike, for example, the electronic device of the background art, hinges can be dispensed with.

In a first embodiment, the display is a touchscreen. According to this embodiment, it is possible to have no electrical link between the first and the second part, as a result of which a particularly easy to manufacture electronic device is obtained.

In a second embodiment, either the first or the second part comprises a bluetooth-type emitter and the other part comprises a bluetooth-type receptor. According to this embodiment, it is possible to have no electrical link between the first and the second part. Actually, a data exchange between the first and the second part is realised by electromagnetic waves.

In a third embodiment, the electronic portable device according to the invention is further characterized in that it comprises means to detect a position of the second part relative to the first part and means to enable a function of the electronic portable device according to the detected position. According to this embodiment, the display can display information according to the position of the second part. For example, if the position of the second part is such that the electronic device is used as a mobile phone, information can be displayed only on an area of the display visible to a user.

In a fourth embodiment, the electronic portable device according to the invention is further characterized in that it comprises at least one button on one of its faces that do not comprise a keyboard. According to this embodiment, the electronic device can be used as a game console offering many possibilities and a lot of comfort to a user.

In a fifth embodiment, at least one of the first and the second part comprises at least one camera. According to this embodiment, the electronic device can be used, for example, as a part of a videoconference system.

In a sixth embodiment, at least one of the first and the second part comprises at least one opening intended to receive a card. According to this embodiment, the electronic device can receive a memory card or a SIM card, which is protected when the second part is in a certain position, for example when the electronic device is used as a mobile phone.

These and other aspects of the invention will be apparent from and elucidated with reference to the embodiments described hereinafter.

### BRIEF DESCRIPTION OF THE DRAWINGS

The invention will now be described in more detail, by way of example, with reference to the accompanying drawings, in which:
Figure 1 shows an electronic portable device in accordance with the invention;
Figure 2a shows a side elevation of the first part of the electronic device of Figure 1;
Figure 2b shows a section of the first part taken on the line IIa-IIa of Figure 2a;
Figure 2c shows a side elevation of the second part of the electronic device of Figure 1;
Figure 2d shows a section of the second part taken on the line IIc-IIc of Figure 2c;
Figure 3 shows a translation of the second part along the first part of the electronic device of Figure 1;
Figure 4 shows a position of the second part allowing the electronic device of Figure 1 to be used, for example, as a mobile Internet device;
Figure 5 shows a rotation of the second part around the first part of the electronic device of Figure 1;
Figure 6 shows an other rotation of the second part around the first part of the electronic device of Figure 1;
Figure 7 shows a position of the second part allowing the electronic device of Figure 1 to be used, for example, as a game console; and
Figures 8a to 8d show means to detect a position of the second part relative to the first part of the electronic device of Figure 1.

### DESCRIPTION OF AT LEAST ONE WAY OF CARRYING OUT THE INVENTION

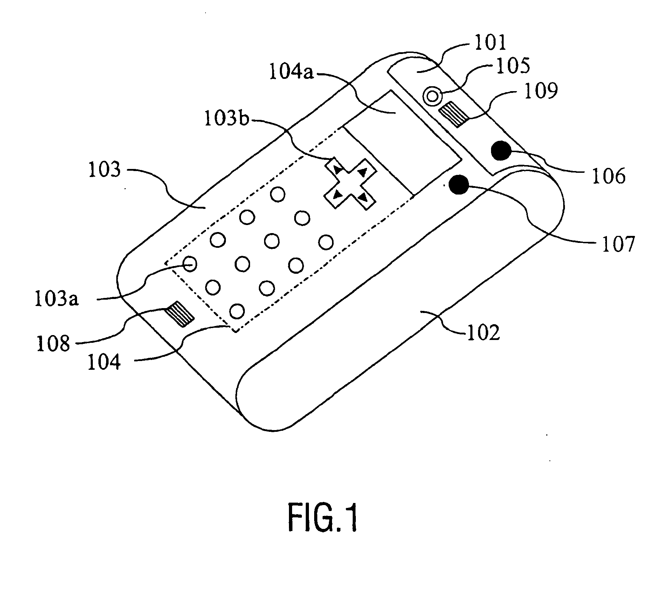

An electronic portable device according to the invention is depicted in Figure 1. Such a device comprises a first part 101 comprising a display 104, a microphone 108 and an earpiece 109, and a second part 102 comprising a keyboard 103. The keyboard 103 comprises for example alphanumerical buttons 103a and direction arrows 103b. The first part 101 can comprise a camera 105.

In a configuration such as the one described in Figure 1, the electronic device is used as a mobile phone. Figure 1 therefore illustrates a first functional position of the electronic device according to the invention. Thanks to the buttons 103a, a user can, for example, dial a phone number or input names in a phone repertory. Thanks to the direction arrows 103b, the user can, for example, navigate in the phone repertory. The information necessary to use the device as a mobile phone, such as the phone number of a calling user, are displayed in an area 104a of the display 104 visible to the user. In Figure 1, an area of the display 104 that is not visible to the user is represented in dotted lines, which means that this area is behind the second part 102 in this configuration.

The display 104 can be a touchscreen. In such a situation, there is no need for any electrical link between the first part 101 and the second part 102. Actually, when a user pushes a button 103a or a direction arrow 103b to initiate an operation such as dialling a number, a sensor placed in the display 104 under this button 103a or this direction arrow 103b recognises this operation. Such a touchscreen is known to those skilled in the art; for example the electronic device cited in the "Background Art" uses such a touchscreen, and will therefore not be described in more detail. When such a touchscreen is used, the electronic device is particularly easy to manufacture, because the second part 102 does not comprise any electronics.

The electronic device can also comprise a bluetooth^{™}-type system. The expression "bluetooth^{™}-type system" means that a data exchange between the first and the second part is realised by electromagnetic waves, that is to say wireless. Such a bluetooth^{™}-type system is known to those skilled in the art; for example a bluetooth^{™} system developed by a group of companies called "The Bluetooth Special Interest Group (SIG)", and will therefore not be described in more detail. In Figure 1, the first part 101 comprises a bluetooth™-type receptor 106 and the second part 102 comprises a bluetooth^{™}-type emitter 107. When such a bluetooth^{™}-type system is used, there is no need for any electrical link between the first part 101 and the second part 102, and hence the electronic device is particularly easy to manufacture.

It is important to notice that an electronic device according to the invention can comprise a touchscreen and a bluetooth^{™}-type system and possibly an electrical link between the first part 101 and the second part 102, or only one or two of these features.

It should also be noticed that the second part 102 may comprise at least one other keyboard, for example on a face opposite to the keyboard 103. In such a situation, a bluetooth^{™}-type system or an electrical link between the first part 101 and the second part 102 is needed.

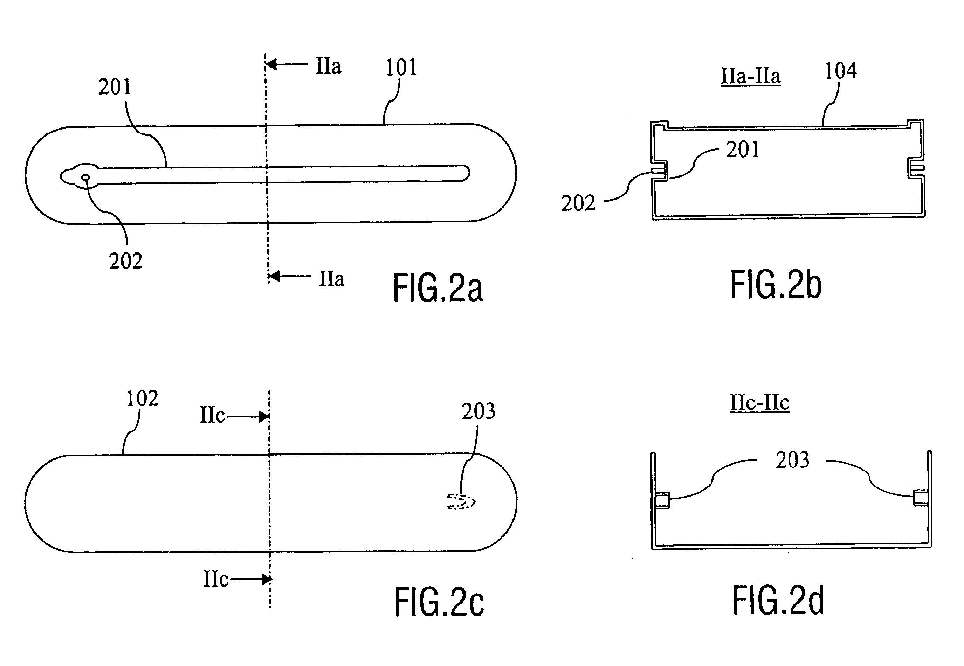

Figures 2a to 2d are side elevations and sections of the first and second part 101 and 102, which present rotating and translating means according to a preferred embodiment of the invention.

Figure 2a and 2b are respectively a side elevation and a section, taken on the line IIa-IIa, of the first part 101 of the electronic device. The first part 101 comprises two slots 201 and two axes of rotation 202.

Figure 2c and 2d are respectively a side elevation and a section, taken on the line IIc-IIc, of the second part 102 of the electronic device. The second part 102 comprises two sliders 203. In Figure 2c, a slider 203 is represented in dotted lines, which means that it is behind a side face of the second part, as one can see in Figure 2d. A slider 203 can slide along a slot 201 and rotate around an axis of rotation 202. Such rotations and translations will be illustrated in the next Figures, which present different possible positions for the electronic device according to the invention.

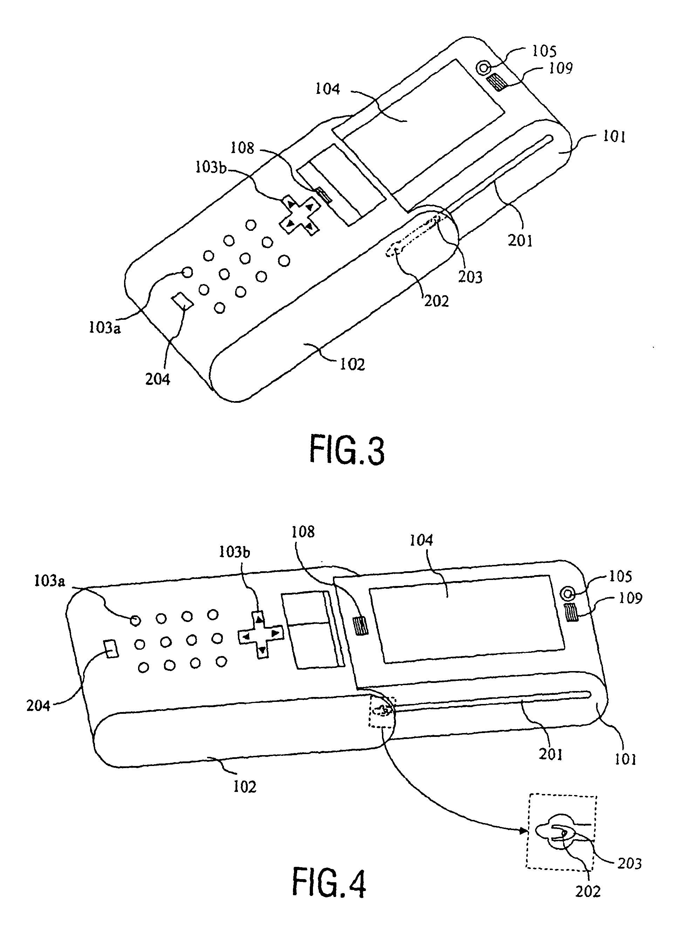

Figure 3 illustrates a first translation of the second part 102 along the first part 101. The two sliders 203 slide along the slots 201, which results in a translation of the second part 102 along the first part 101 of the electronic device. In this Figure, one can see that the second part 102 comprises a hole 204, which was not visible in the Figures described hereinbefore. This hole 204 is intended to allow a user to speak in the microphone 108 when the electronic device according to the invention is used as a mobile phone.

Figure 4 illustrates a second functional position of the electronic device according to the invention. This position corresponds to a complete translation of the second part 102 along the first part 101. The axis of rotation 202 is a limit stop for the slider 203, as one can see in a zoomed-in area represented by a dotted square in Figure 4.

In such a position of the electronic device, the display 104 is entirely visible to a user. The electronic device can therefore be used, for example, as a mobile Internet device. For example, a user can write an e-mail by dialling alphanumerical characters thanks to the buttons 103a; the e-mail is displayed on the display 104.

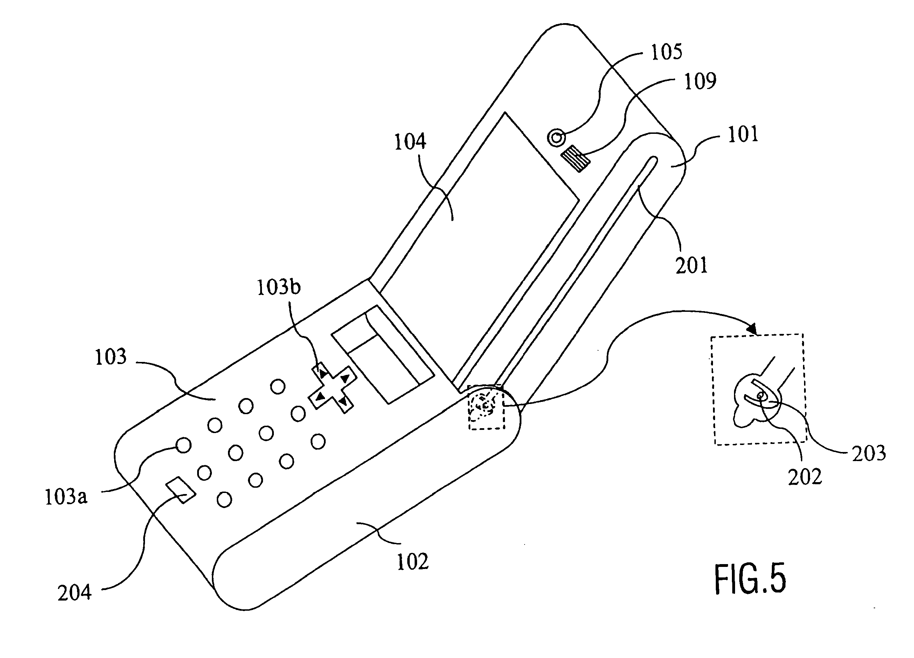

Figure 5 illustrates a third functional position of the electronic device according to the invention. This position corresponds to a first rotation of the second part 102 around the first part 101. As one can see in a zoomed-in area represented by a dotted square in Figure 5, the slider 203 rotates around the axis of rotation 202, which results in a rotation of the second part 102 around the first part 101 of the electronic device.

In such a position of the electronic device, the electronic device according to the invention can be used as a part of a videoconference system. Actually, a user can place the electronic device, in this third functional position, in front of him and communicate with a remote user. The user can be seen by the remote user thanks to the camera 105 and the user can see the remote user on the display 104 if the remote user has a camera in front of him. Furthermore, the user, during the videoconference, can dial on the keyboard 103 to send written information to the remote user.

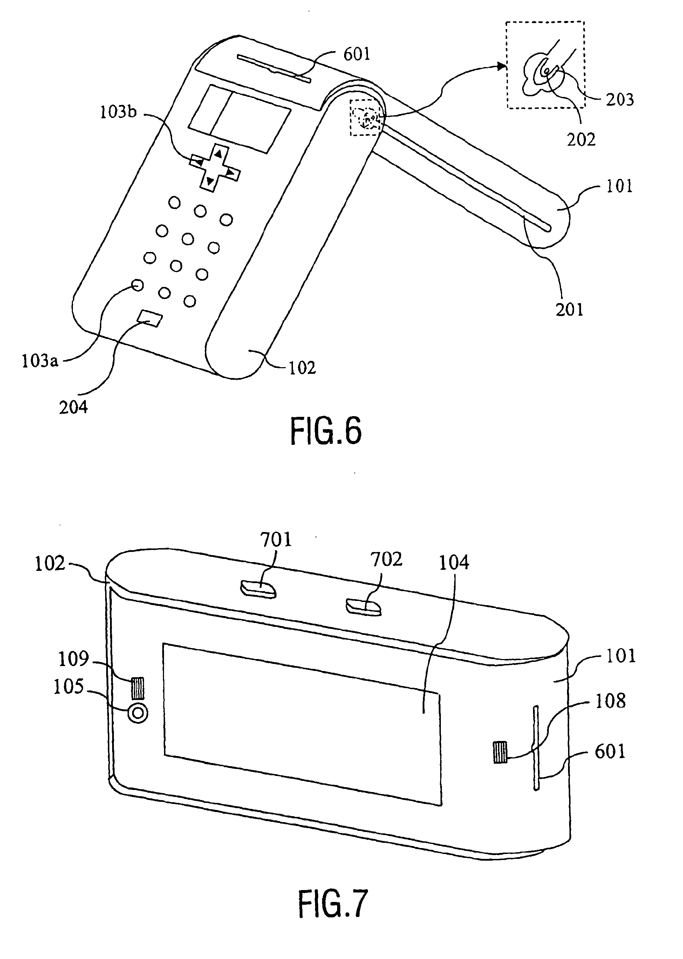

Figure 6 shows a second rotation of the second part 102 around the first part 101 of the electronic device according to the invention. In this Figure, one can see an opening 601, which was not visible in the Figures described hereinbefore. This opening 601 is intended to receive a card such as a SIM card or a memory card. When the electronic device is in a configuration such that it can be used as a mobile phone, for example the configuration of Figure 1, the opening 601 and the card that is possibly inserted in this opening 601 are protected by the second part 102 from, for example, dust or humidity. Furthermore, in such a configuration, the card cannot be removed from the opening 601, so that it is precluded that, for example, a SIM card is accidentally removed during communication, which would stop this communication.

Figure 7 shows a fourth functional position of the electronic device according to the invention. In such a configuration, the electronic device can be used, for example, as a game console or as a mobile Internet device. In this Figure, one can see a first and a second button 701 and 702, which were not visible in the Figures described hereinbefore. These buttons 701 and 702 can be used to play a game in conjunction with the keyboard 103 placed behind the first part 101 in such a configuration. If the keyboard 103 is used to play a game when the electronic device is in this fourth functional position, a bluetooth^{™}-type system or an electrical link between the first part 101 and the second part 102 are needed.

It should be noticed that in the case that the display 104 is a touchscreen, a user can dial directly on the display 104, for example with a finger or with a stylus, irrespective of the position of the electronic device. It should also be noticed that the electronic device according to the invention can be used as a camera or a camcorder thanks to the camera 105, irrespective of the position of the electronic device. In such a case, the first button 701 or the second button 702 can be used as a shutter release for the camera.

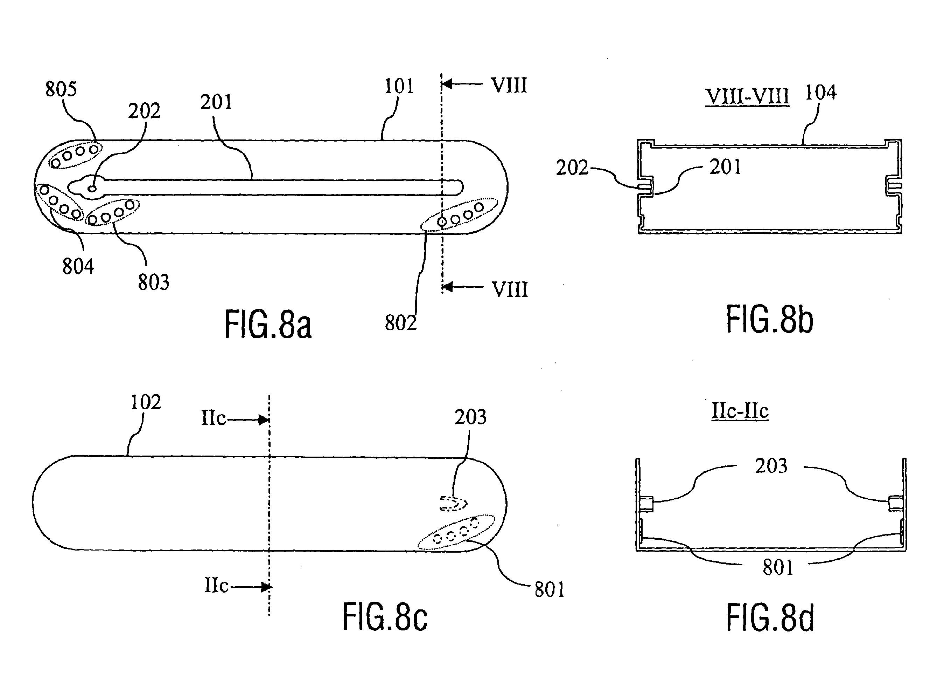

Figures 8a to 8d show means to detect a position of the second part 102 relative to the first part 101 of the electronic device according to the invention. The different views of the first part 101 and the second part 102 depicted in these Figures are the same as those depicted in Figures 2a to 2d, respectively, except for the section depicted in Figure 8b, which is taken on a line VIII-VIII that is different from the line IIa-IIa.

As one can see in Figure 8c and 8d, the second part 102 comprises a group of contact studs 801. As one can see in Figure 8a and 8b, the first part 101 comprises a first group of contact holes 802, a second group of contact holes 803, a third group of contact holes 804 and a fourth group of contact holes 805.

When the electronic device is in the position depicted in Figure 1, which will be called the "mobile phone position", the group of contact studs 801 is in contact with the first group of contact holes 802. When the electronic device is in the position depicted in Figure 4, which will be called the "mobile Internet device position", the group of contact studs 801 is in contact with the second group of contact holes 803. When the electronic device is in the position depicted in Figure 5, which will be called the "videoconference position", the group of contact studs 801 is in contact with the third group of contact holes 804. When the electronic device is in the position depicted in Figure 7, which will be called the "game position", the group of contact studs 801 is in contact with the fourth group of contact holes 805.

In a case where a touchscreen or a bluetooth^{™}-type system is used, without any electrical link between the first part 101 and 102, the contact studs can be magnets. A magnetic sensor placed behind each contact hole detects a magnetic field created by the magnets, so that it is possible to detect which group of contact holes is in contact with the group of contact studs 801 and therefore in which position the device is.

In a case where an electrical link is needed between the first part 101 and the second part 102, the contacts studs and the contact holes can be used as electrical link. When the electronic device detects a current flow in a group of contact holes, he can detect in which position the device is.

When a position is detected, the electronic device is configured according to this position. For example, when the "mobile phone position is detected", the electronic device displays information only in the area 104a of the display 104 visible to the user. Nevertheless, it is important to notice that a choice might be offered to a user in order to allow him to configure the electronic device. For example, when the "game position" is detected, the electronic device is configured to play a game. But the user might want to use it as a mobile Internet device, and has the possibility to configure it as a mobile Internet device.

Furthermore, the contact studs and contact holes can be used as mechanical blocking systems in order to stabilise the electronic device in a certain position.

It should be noticed that the second part 102 may be detached from the first part 101 in order to change this second part. For example, one can change the colour of the second part 102, or one can change the type of keyboard used.

It should also be noticed that functional positions different from the four functional positions cited hereinbefore might be obtained with the electronic device according to the invention, without departing from the scope of the invention as defined by the appended claims.

## Claims

1. An electronic portable device comprising at least :
- a first part comprising a display (104) on a display face;
- a second part comprising a keyboard (103) on a keyboard face, wherein in a first position the second part partially masks the display; and
- translating means allowing the second part to translate along the first part along an axis of translation such that the second part reaches, from the first position, a second position in which a visible area of the display is greater than in the first position and the display face and the keyboard face form an angle of 180 degrees;
said electronic portable device being **characterized in that** it comprises rotating means allowing the second part to rotate around the first part around an axis of rotation perpendicular to the axis of translation after the second part has reached the second position, such that the second part reaches, from the second position, a third position in which the display face and the keyboard face form an angle strictly larger than 180 degrees and lower than or equal to 360 degrees.

2. An electronic portable device as claimed in Claim 1, wherein :
- said translating means comprise at least one slot (201) along which a slider (203) can slide ; and
- said rotating means comprise at least one axis of rotation (202) around which the slider (203) can rotate ;
said slot and said axis of rotation belonging to either the first part or the second part, and said slider belonging to the other part.

3. An electronic portable device as claimed in Claim 1, wherein said display is a touchscreen.

4. An electronic portable device as claimed in Claim 1, wherein either the first or the second part comprises a bluetooth^{™}-type emitter (107) and the other part comprises a bluetooth^{™}-type receptor (106).

5. An electronic portable device as claimed in Claim 1, further **characterised in that** it comprises :
- means (801-805) to detect a position of the second part relative to the first part;
- means to enable a function of the electronic portable device according to the detected position.

6. An electronic portable device as claimed in Claim 1, further **characterised in that** it comprises at least one button (701) on one of its faces that do not comprise a keyboard.

7. An electronic portable device as claimed in Claim 1, wherein at least one of the first and the second part comprises at least one camera (105).

8. An electronic portable device as claimed in Claim 1, wherein at least one of the first and the second part comprises at least one opening (601) intended to receive a card.

## Patentansprüche

1. Elektronisches tragbares Gerät, welches wenigstens umfasst:
- einen ersten Teil, der ein Display (104) auf einer Displayfläche umfasst;
- einen zweiten Teil, der eine Tastatur (103) auf einer Tastaturfläche umfasst, wobei in einer ersten Position der zweite Teil das Display teilweise abdeckt; und
- Translationsmittel, die es dem zweiten Teil ermöglichen, sich entlang des ersten Teils entlang einer Translationsachse translatorisch zu bewegen, derart, dass der zweite Teil von der ersten Position aus eine zweite Position erreicht, in welcher ein sichtbarer Bereich des Displays größer ist als in der ersten Position und die Displayfläche und die Tastaturfläche einen Winkel von 180 Grad bilden;
wobei das elektronische tragbare Gerät **dadurch gekennzeichnet ist, dass** es Rotationsmittel umfasst, die es dem zweiten Teil ermöglichen, um den ersten Teil um eine Rotationsachse zu rotieren, die zu der Translationsachse senkrecht ist, nachdem der zweite Teil die zweite Position erreicht hat, derart, dass der zweite Teil von der zweiten Position aus eine dritte Position erreicht, in welcher die Displayfläche und die Tastaturfläche einen Winkel bilden, der streng größer als 180 Grad ist und kleiner oder gleich 360 Grad ist.

2. Elektronisches tragbares Gerät nach Anspruch 1, wobei:
- die Translationsmittel wenigstens einen Schlitz (201) umfassen, in dem ein Gleitstück (203) entlang gleiten kann; und
- die Rotationsmittel wenigstens eine Rotationsachse (202) umfassen, um welche das Gleitstück (203) rotieren kann;
wobei der Schlitz und die Rotationsachse entweder zu dem ersten Teil oder zu dem zweiten Teil gehören und das Gleitstück zu dem jeweils anderen Teil gehört.

3. Elektronisches tragbares Gerät nach Anspruch 1, wobei das Display ein Berührungsbildschirm ist.

4. Elektronisches tragbares Gerät nach Anspruch 1, wobei entweder der erste oder der zweite Teil einen Sender (107) vom Bluetooth^{™}-Typ umfasst und der andere Teil einen Empfänger (106) vom Bluetooth^{™}-Typ umfasst.

5. Elektronisches tragbares Gerät nach Anspruch 1, ferner **dadurch gekennzeichnet, dass** es umfasst:
- Mittel (801-805), um eine Position des zweiten Teils relativ zu dem ersten Teil zu erkennen; und
- Mittel, um eine Funktion des elektronischen tragbaren Gerätes entsprechend der erkannten Position zu aktivieren.

6. Elektronisches tragbares Gerät nach Anspruch 1, ferner **dadurch gekennzeichnet, dass** es wenigstens eine Taste (701) auf einer seiner Flächen umfasst, welche keine Tastatur umfassen.

7. Elektronisches tragbares Gerät nach Anspruch 1, wobei wenigstens einer der Teile, der erste oder der zweite, wenigstens eine Kamera (105) umfasst.

8. Elektronisches tragbares Gerät nach Anspruch 1, wobei wenigstens einer der Teile, der erste oder der zweite, wenigstens eine Öffnung (601) umfasst, die dazu bestimmt ist, eine Karte aufzunehmen.

## Revendications

1. Dispositif électronique portatif comprenant au moins:
- une première partie comprenant un afficheur (104) sur une face de l'afficheur;
- une deuxième partie comprenant un clavier (103) sur une face du clavier où dans une première position la deuxième partie masque l'afficheur; et
- des moyens de translation permettant à la deuxième partie de se déplacer le long de la première partie le long d'un axe de rotation de telle façon que la deuxième partie atteigne, à partir de la première position, une deuxième position dans laquelle un secteur visible de l'afficheur est supérieur à celui dans la première position et la face de l'afficheur et la face du clavier font un angle égal à 180 degrés;
ledit dispositif électronique portatif étant **caractérisé en ce qu'**il comprend des moyens de rotation permettant que la deuxième partie tourne autour de la première partie autour d'un axe de rotation qui est perpendiculaire à l'axe de translation après que la deuxième partie a atteint la deuxième position de telle façon que la deuxième partie atteigne, à partir de la deuxième position, une troisième position dans laquelle la face de l'afficheur et la face du clavier font un angle qui est strictement supérieur à 180 degrés et qui est inférieur ou égal à 360 degrés.

2. Dispositif électronique portatif selon la revendication 1, dans lequel:
- lesdits moyens de translation comprennent au moins une rainure (201) le long de laquelle un glisseur (203) peut glisser; et
- lesdits moyens de rotation comprennent au moins un axe de rotation (202) autour duquel le glisseur (203) peut tourner;
- ladite rainure et ledit axe de rotation appartenant soit à la première partie, soit à la deuxième partie, et ledit glisseur appartenant à l'autre partie.

3. Dispositif électronique portatif selon la revendication 1, dans lequel ledit afficheur est un écran tactile.

4. Dispositif électronique portatif selon la revendication 1, dans lequel soit la première partie, soit la deuxième partie comprend un émetteur (107) du type de bluetooth^{™} et l'autre partie comprend un récepteur (106) du type de bluetooth^{™}.

5. Dispositif électronique portatif selon la revendication 1, qui est encore **caractérisé en ce qu'**il comprend:
- des moyens (801 à 805) pour détecter une position de la deuxième partie par rapport à la première partie;
- des moyens pour permettre une fonction du dispositif électronique portatif selon la position détectée.

6. Dispositif électronique portatif selon la revendication 1, qui est encore **caractérisé en ce qu'**il comprend au moins un bouton (701) sur une de ses faces qui ne comprennent pas de clavier.

7. Dispositif électronique portatif selon la revendication 1, dans lequel au moins une de la première partie et de la deuxième partie comprend au moins une caméra (105).

8. Dispositif électronique portatif selon la revendication 1, dans lequel au moins une de la première partie et de la deuxième partie comprend au moins une ouverture (601) qui est destinée à recevoir une carte.
